Europäisches Patentamt

European Patent Office

Office européen des brevets

(11) Veröffentlichungsnummer: **0 112 966**

**A1**

(12) # EUROPÄISCHE PATENTANMELDUNG

(21) Anmeldenummer: 83108476.9

(22) Anmeldetag: 29.08.83

(51) Int. Cl.³: **G 11 B 23/02**
**G 11 B 1/02**

(30) Priorität: 23.12.82 DE 3247796

(43) Veröffentlichungstag der Anmeldung:
11.07.84 Patentblatt 84/28

(84) Benannte Vertragsstaaten:
AT BE CH DE FR GB IT LI NL SE

(71) Anmelder: idn inventions and development of novelties ag
Hartbertstrasse 9
CH-7002 Chur(CH)

(72) Erfinder: Ackeret, Peter
Allmendstrasse 18
CH-8700 Küsnacht(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Aufbewahrungsvorrichtung für flache Aufzeichnungsträger.

(57) Die Aufbewahrungsvorrichtung ist besonders für Aufzeichnungsträger (33) geeignet, die im Verhältnis zu ihren Flächenabmessungen dünn sind, wie vor allem Compactdiscs. Um den zur Verfügung stehenden Raum in einem Gehäuse (1) auszunutzen, lagern die Discs (33) eng gepackt im Gehäuse, werden aber bei dessen Öffnung derart aufgespreizt, dass mindestens eine bequem erfassbar ist und in den freien Speicherplatz auch bequem wieder einführbar ist.

Die vorrichtung ist insbesondere für die Benutzung in Kraftfahrzeugen bestimmt.

Fig. 4

DIPL.-ING. H. MARSCH 1931-1979
DIPL.-ING. K. SPARING
DIPL.-PHYS. DR. W. H. RÖHL
PATENTANWÄLTE
ZUGEL. VERTRETER BEIM EUROPÄISCHEN PATENTAMT

4000 DÜSSELDORF 1
RETHELSTRASSE 123
POSTFACH 140268
TELEFON (0211) 671034

0112966

idn inventions and development
    of novelties ag
CH - 7002 Chur

49/91

-----------------------------------------

## Aufbewahrungsvorrichtung für flache Aufzeichnungsträger
-----------------------------------------

Die Erfindung betrifft eine Aufbewahrungsvorrichtung für flache Aufzeichnungsträger, wie Kompaktschallplatten, Single- oder LP-Schallplatten, Disketten oder Magnetbandkassetten.

Schallplatten werden üblicherweise in ihren Hüllen stehend aufbewahrt, etwa in Regalfächer eingeordnet. Diese Lösung erlaubt zwar eine raumsparende Lagerung, ist jedoch für den Benutzer umständlich in der Handhabung und erfordert Sucharbeit. Für die Verwendung in Kraftfahrzeugen, die bei den modernen Kompaktschallplatten mit Laserabtastung sich anbietet, ist eine solche Lösung ersichtlich unbrauchbar.

Aufgabe der Erfindung ist es, eine Aufbewahrungsvorrichtung der eingangs genannten Gattung zu schaffen, die eine raumsparende Unterbringung der Aufzeichnungsträger ermöglicht, jedoch andererseits für die Entnahme und die Wiedereinordnung derselben eine bequeme Bedienung, insbesondere die Einhandbedienung zuläßt und damit besonders zum Einbau in Kraftfahrzeuge geeignet ist.

Die gemäß der Erfindung vorgesehene Lösung dieser Aufgabe ergibt sich aus dem Patentanspruch 1; die Unteransprüche definieren zweckmäßige Weiterbildungen der Erfindungsidee.

Ausführungsbeispiele des Gegenstandes der Erfindung werden nachstehend unter Bezugnahme auf die beigefügten Zeichnungen näher erläutert.

Figuren 1 bis 10 stellen ein erstes Ausführungsbeispiel dar;

Fig. 1     ist eine weitgehend schematisierte Schnittdarstellung durch eine geschlossene Aufbewahrungsvorrichtung,

Fig. 2     ist ein Schnitt etwa in Höhe der Ebene 2-2 der Fig. 1,

Fig. 3     ist ein Schnitt etwa in Höhe der Ebene 3-3 der Fig. 1,

Fig. 4     ist ein Schnitt ähnlich Fig. 3, jedoch bei geöffneter Vorrichtung,

Fig. 5     zeigt eine einzelne Aufnahmeplatte in Draufsicht in einer gegenüber Fig. 1 etwas abgewandelten Ausführung,

Fig. 6 und 7    stellen im Detail alternativ Lösungen für die Verbindung zwischen Schieber und Aufnahmeplatte dar,

Fig. 8     zeigt eine abgewandelte Form der Aufnahmeplatten in Teilseitenansicht,

Fig. 9     ist eine Teilschnitt-Seitenansicht einer Vorrichtung in einer weiteren Variante, und

Fig. 10    stellt eine einzelne Aufnahmeplatte aus Fig. 9 in Draufsicht dar.

Die Figuren 11 bis 15 beziehen sich auf eine zweite Ausführungsform des Gegenstandes der Erfindung:

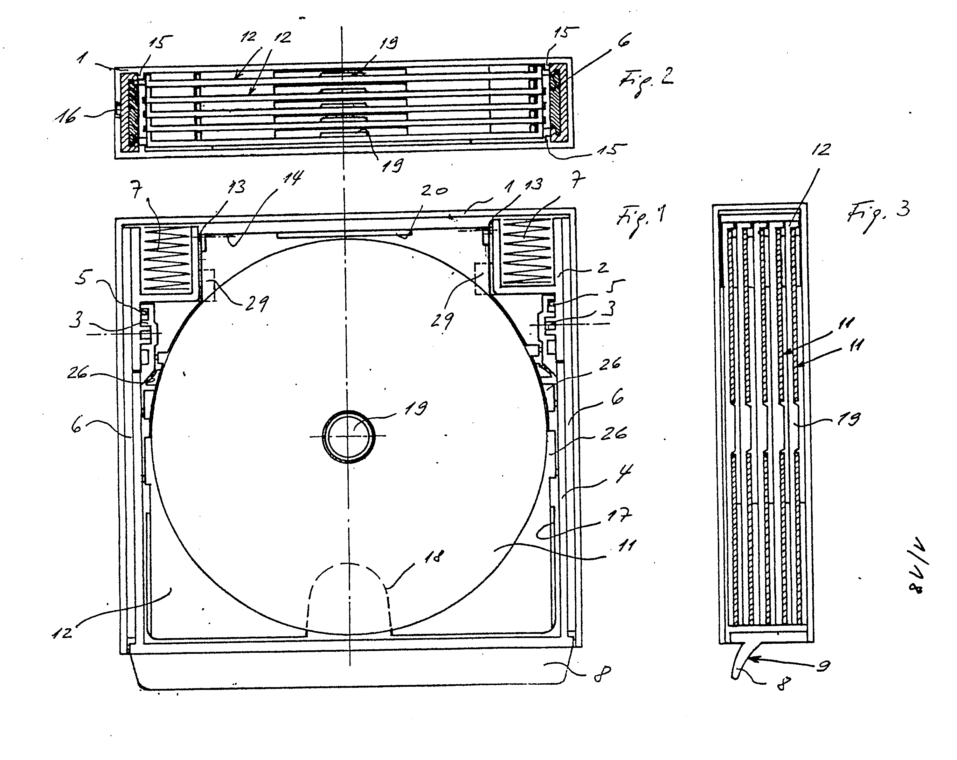

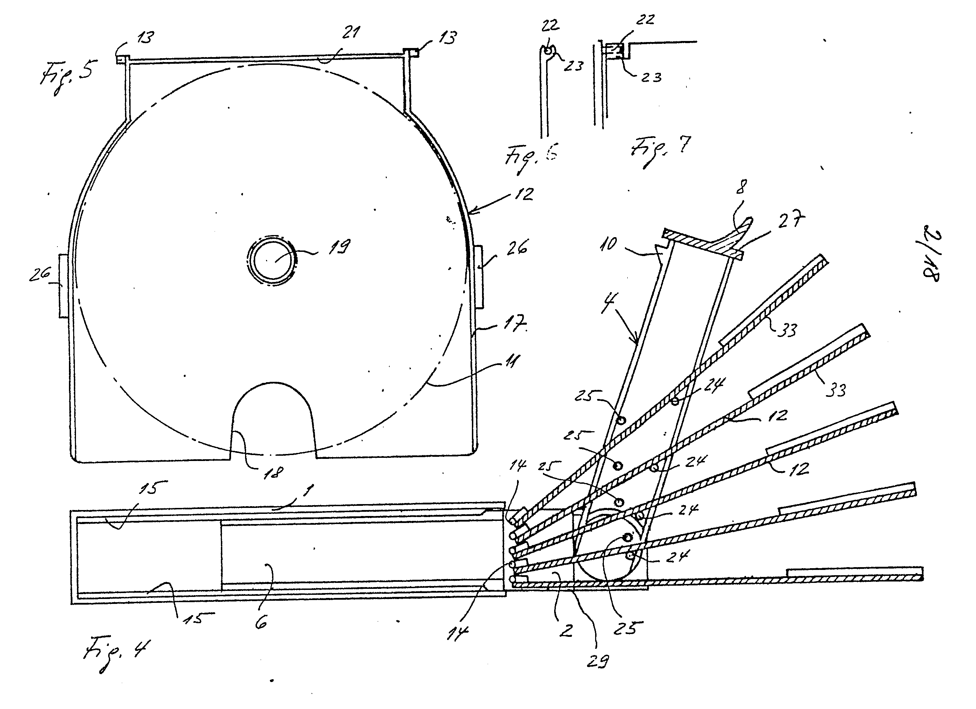

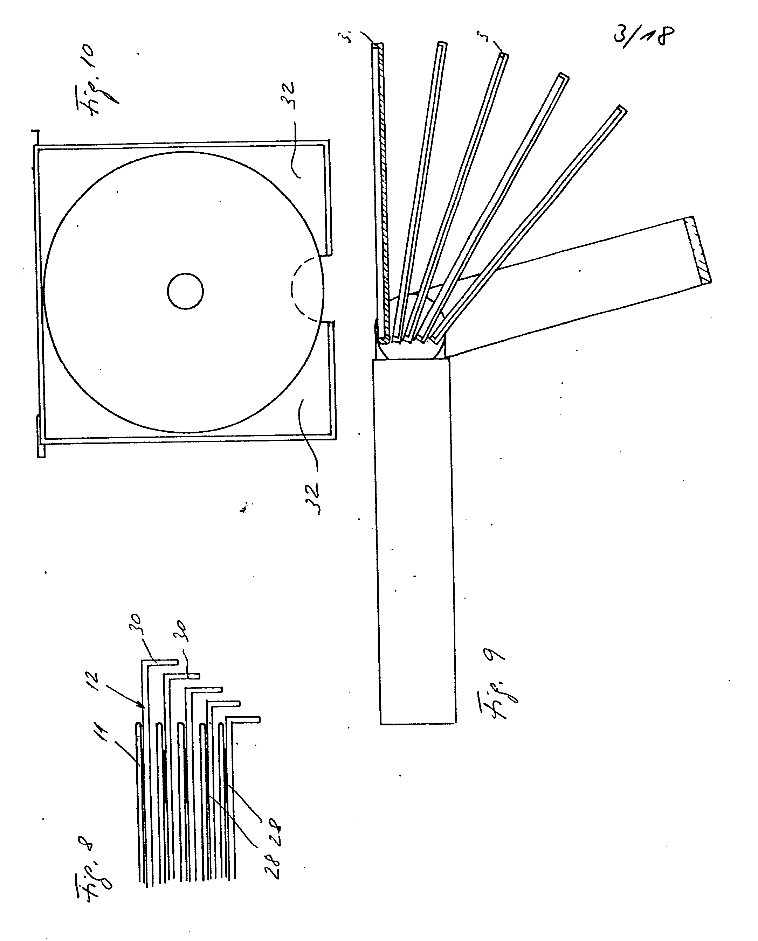

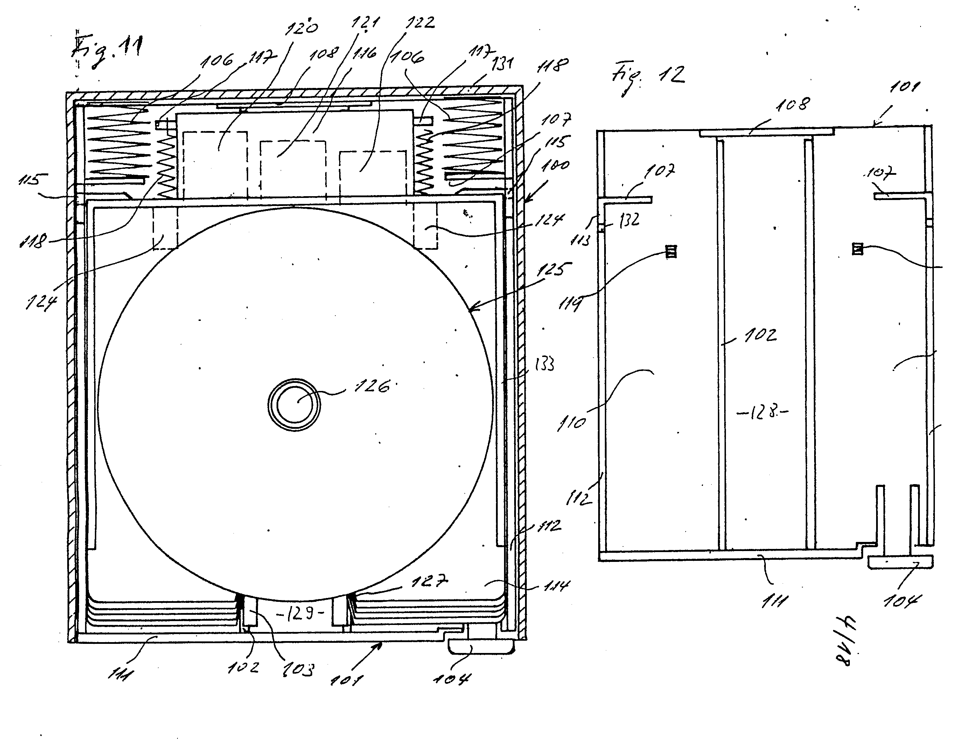

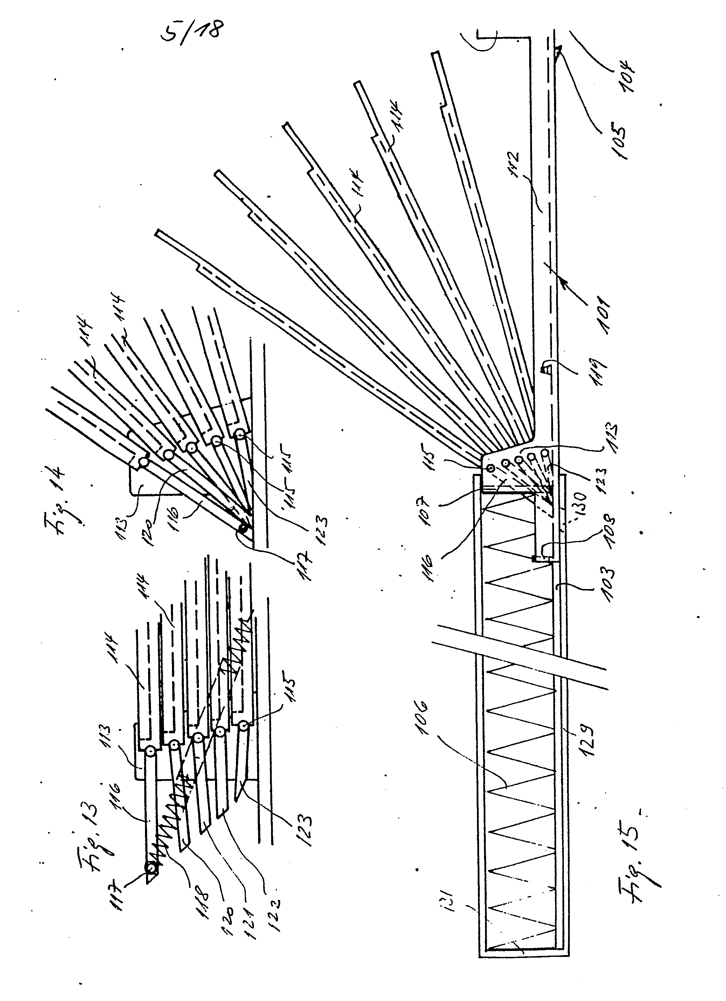

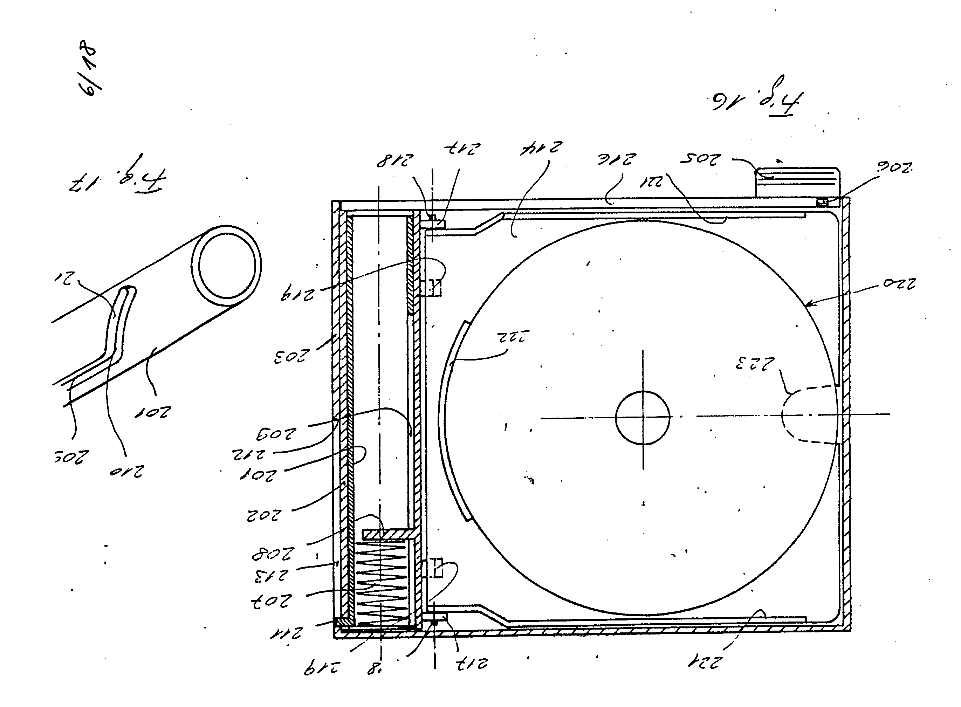

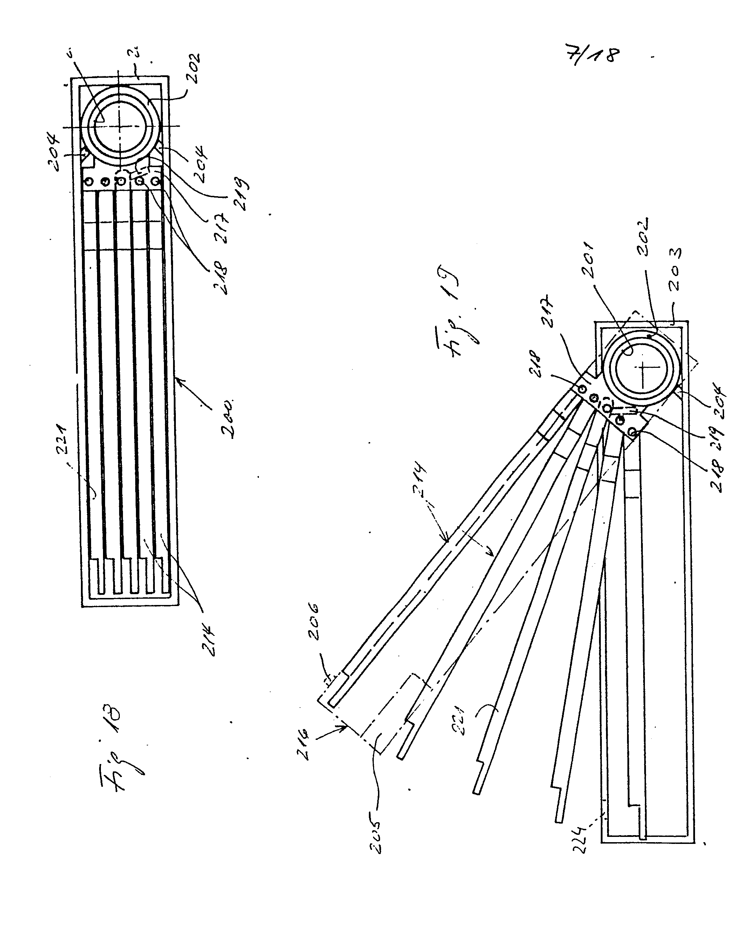

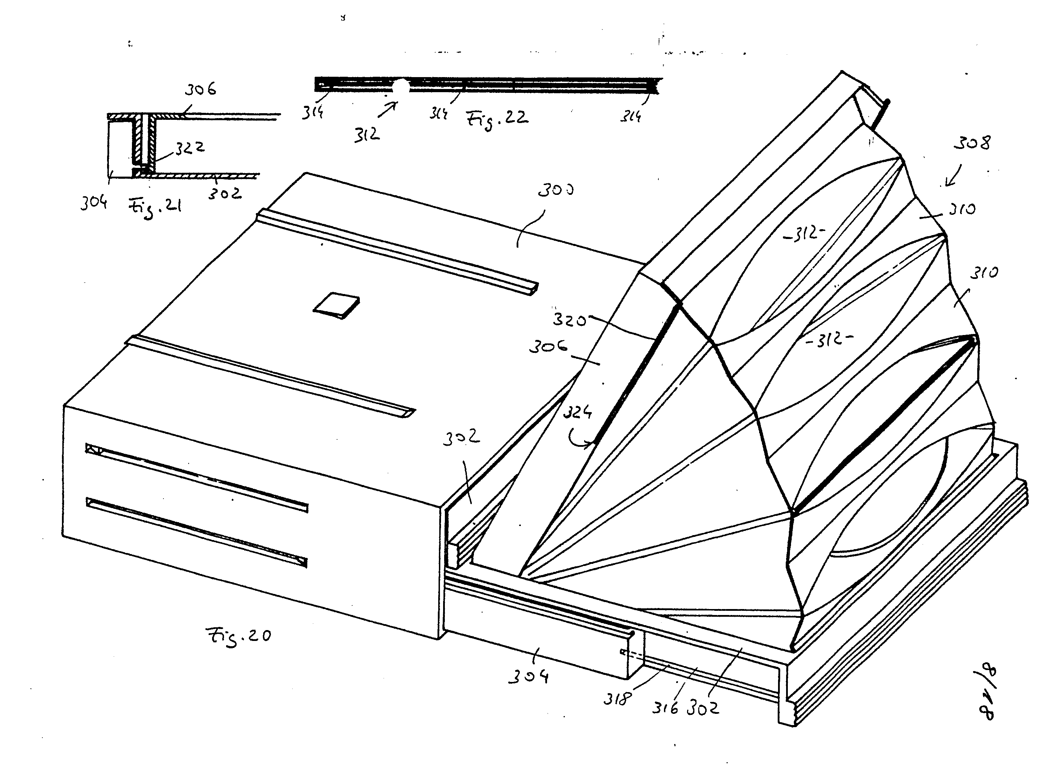

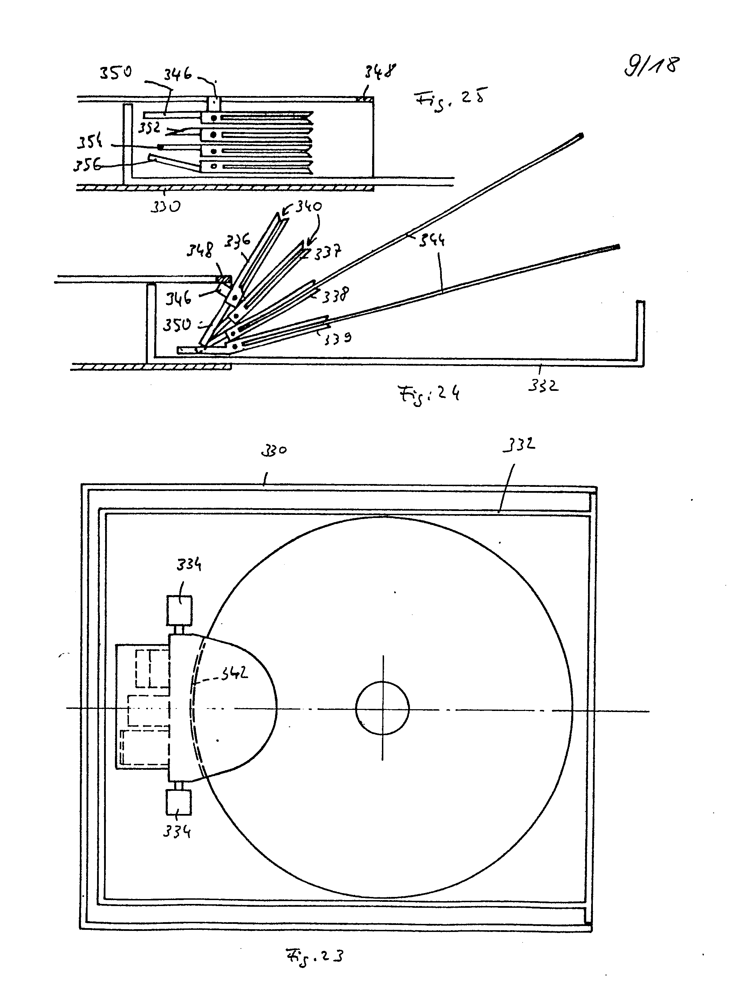

Fig. 11    ist eine Darstellung analog zu Fig. 1,

Fig. 12    zeigt den Schieber in Draufsicht,

Fig. 13    zeigt in Teilschnittdarstellung die Anordnung der Aufnahmeplatten in der Aufbewahrungsposition,

Fig. 14    zeigt analog zu Fig. 13 die Aufspreizposition, und

Fig. 15    stellt in Seitenansicht, teilweise geschnitten, die geöffnete Aufbewahrungsvorrichtung dar.

Die Figuren 16 bis 19 beziehen sich auf eine dritte Ausführungsform des Gegenstandes der Erfindung:

Fig. 16    ist eine Darstellung analog zu Fig. 1,

Fig. 17    zeigt perspektivisch ein Detail,

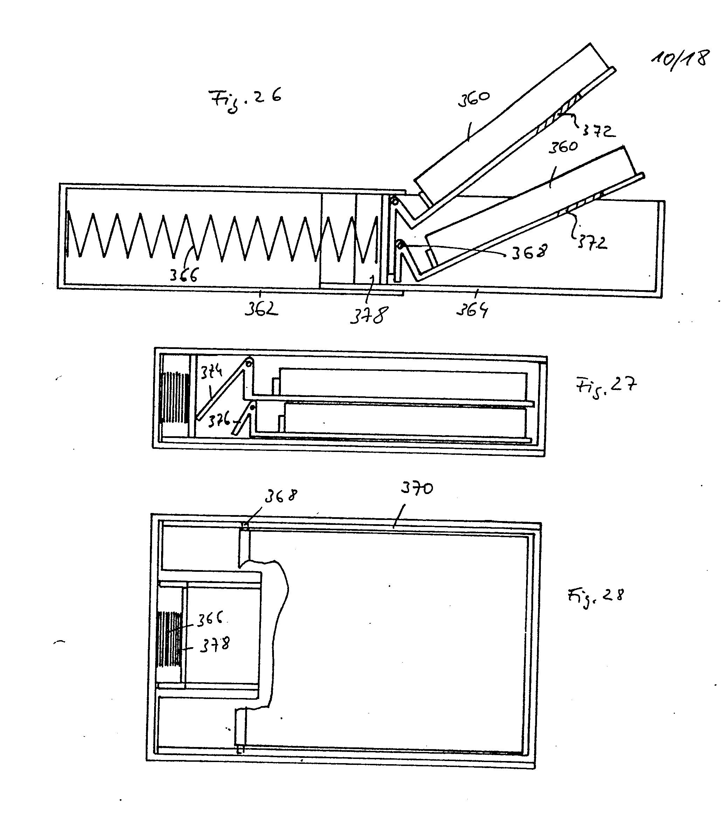

Fig. 18    ist eine Schnittzeichnung analog zu Fig. 2, und

Fig. 19    stellt die geöffnete Aufbewahrungsvorrichtung analog zu Fig. 18 dar.

Die Figuren 20 bis 22 betreffen ein weiteres Ausführungsbeispiel:

Fig. 20 zeigt perspektivisch die geöffnete Vorrichtung,

Fig. 21 ist eine Detail-Teilschnittdarstellung,

Fig. 22 zeigt in Frontansicht eine der Taschen.

Die Fig. 23 bis 25 stellen ein weiteres Ausführungsbeispiel dar:

Fig. 23 zeigt schematisch in Draufsicht die Konstruktion,

Fig. 24 ist ein Teilvertikalschnitt, und

Fig. 25 ist eine Darstellung analog zu Fig. 24 bei geschlossener Vorrichtung.

Figuren 26 bis 28 stellen schematisch eine Vorrichtung gemäss der Erfindung zum Aufbewahren von Magnetbandkassetten dar:

Fig. 26 ist ein Vertikalschnitt,

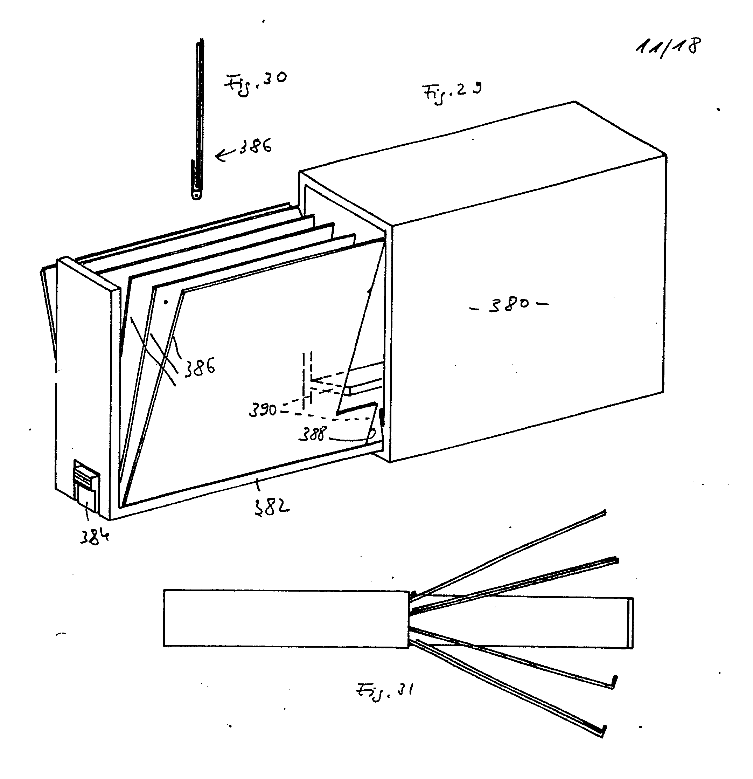

Fig. 27 entspricht Fig. 26, zeigt jedoch die geschlossene Vorrichtung, und

Fig. 28 ist eine teilgeschnittene Draufsicht.

Fig. 29 und 30 beziehen sich auf eine weitere Ausführungsform:

Fig. 29 zeigt die geöffnete Vorrichtung in Perspektive,

Fig. 30 ist eine Frontansicht eines Halters.

Fig. 31 ist eine schematische Draufsicht auf eine Variante des vorhergehenden Ausführungsbeispiels.

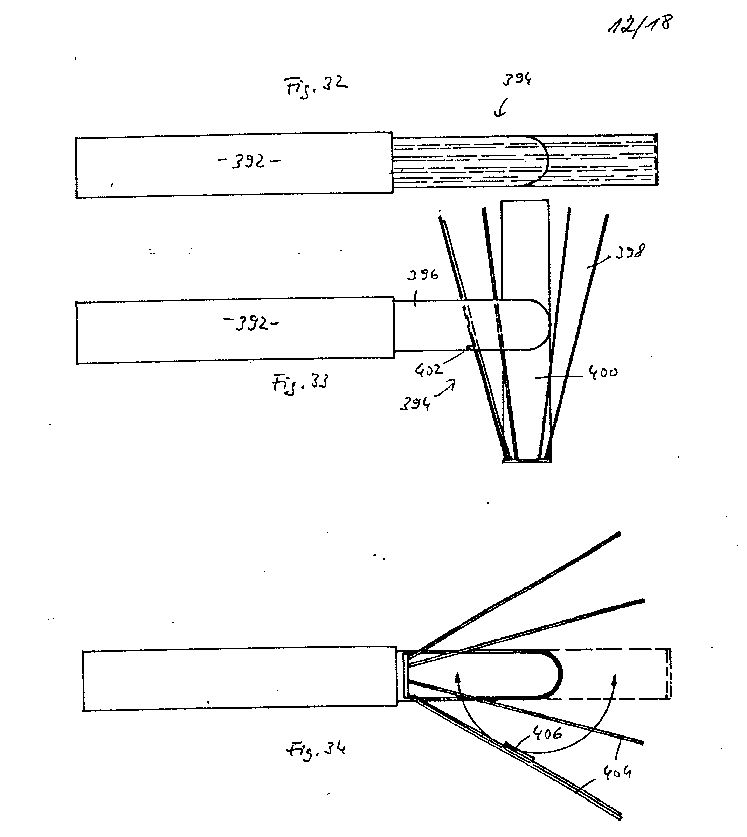

Fig. 32 und 33 zeigen in schematischer Seitenansicht ein weiteres Ausführungsbeispiel, und Fig. 34 zeigt analog eine Variante.

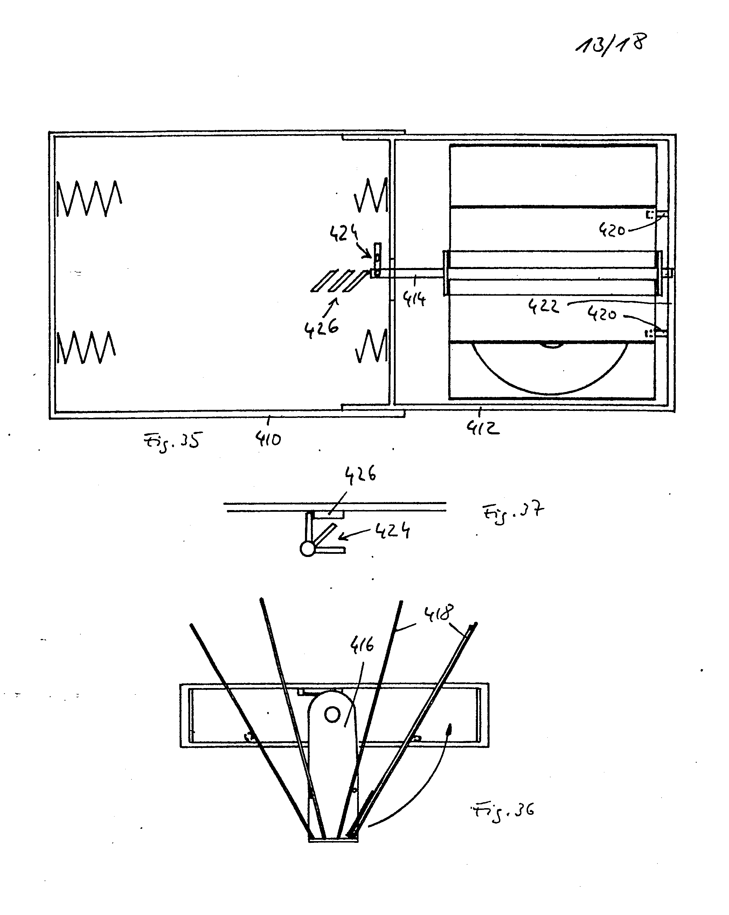

Fig. 35 bis 37 stellen eine weitere Ausführungsform dar:

Fig. 35 zeigt in schematischem Horizontalschnitt die Vorrichtung,

Fig. 36 ist eine Frontansicht, und

Fig. 37 zeigt das Zwangsführungssystem.

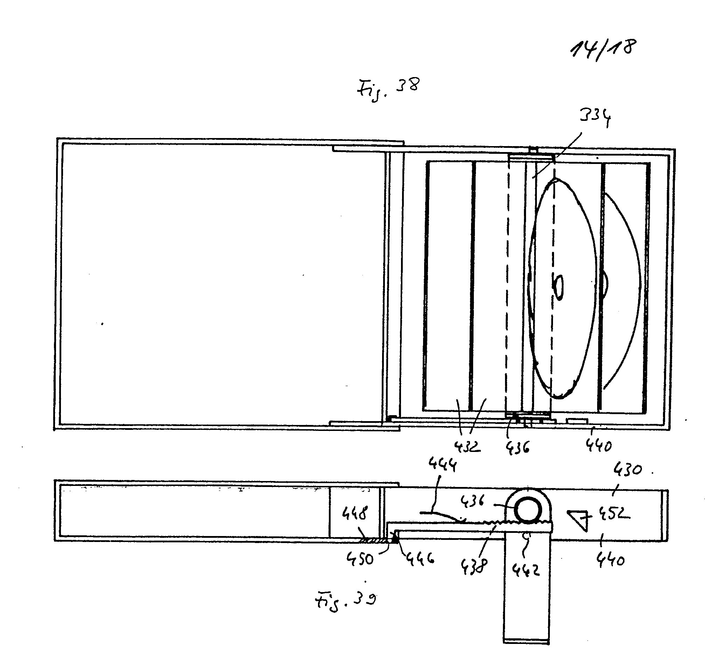

Fig. 38 zeigt in schematisierter Draufsicht, Fig. 39 in schematisierter Seitenansicht eine weitere Ausführungsform.

Fig. 40 bis 42 stellen ein weiteres Ausführungsbeispiel dar:

Fig. 40 zeigt in Seitenansicht die fast geöffnete Vorrichtung,

Fig. 41 zeigt entsprechend die ganz geöffnete Vorrichtung, und

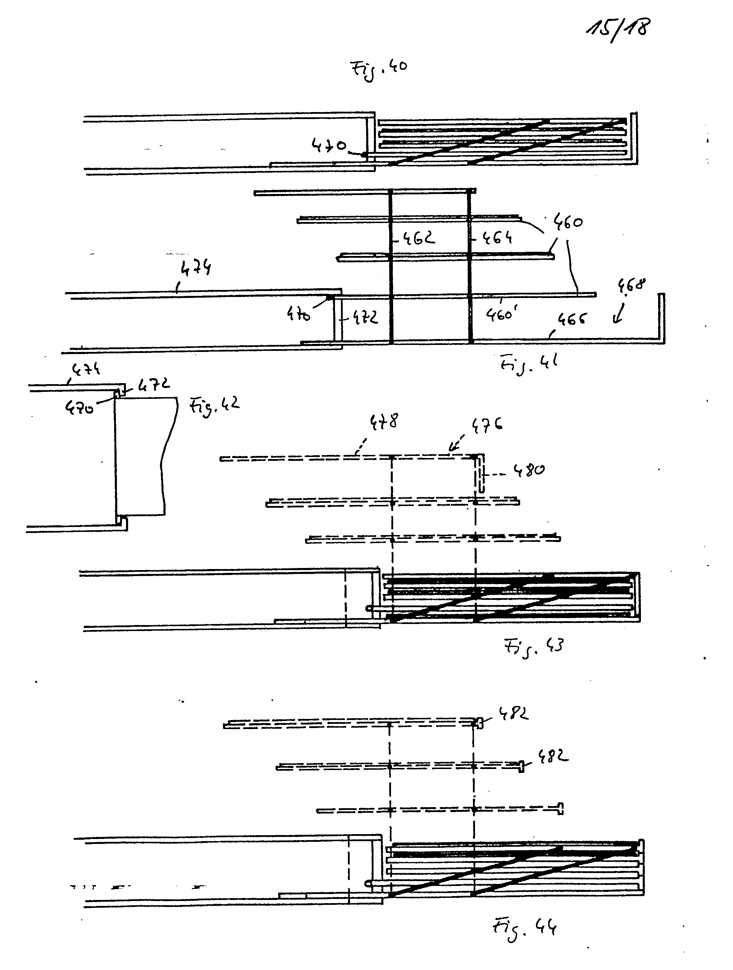

Fig. 42 stellt im Horizontalteilschnitt die Zwangssteuerung dar.

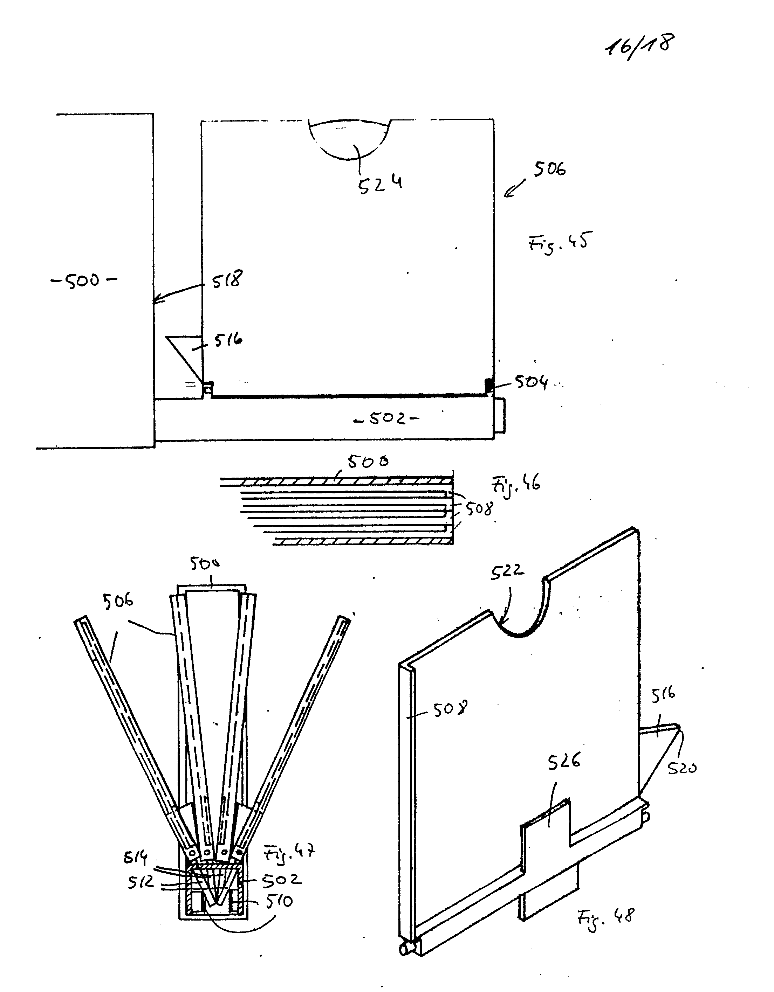

Fig. 43 und 44 sind zugehörige Varianten in analoger Darstellung.

Fig. 45 bis 48 betreffen ein weiteres Ausführungsbeispiel:

Fig. 45 zeigt in Teilseitenansicht die geöffnete Vorrichtung,

Fig. 46 ist ein Teilhorizontalschnitt der geschlossenen Vorrichtung,

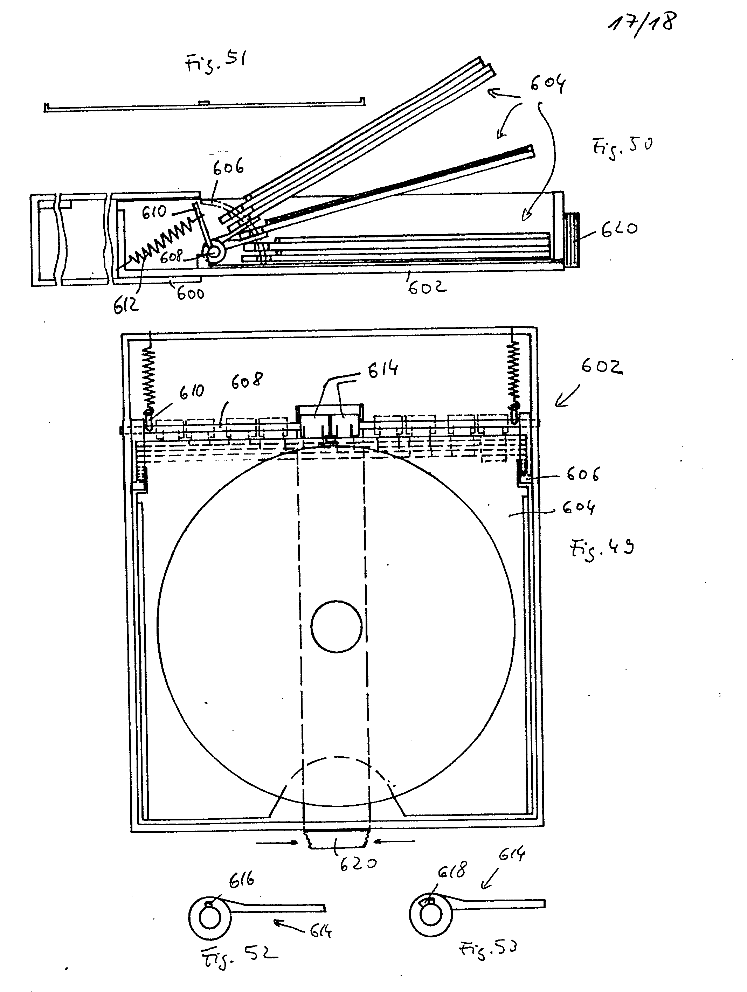

Fig. 47 zeigt in teilgeschnittener Frontansicht die geöffnete Vorrichtung, und

Fig. 48 stellt perspektivisch einen der äusseren Halter dar.

Fig. 49 bis 53 schliesslich zeigen ein weiteres Ausführungsbeispiel:

Fig. 50 ist eine Vertikalschnittdarstellung der geöffneten Vorrichtung,

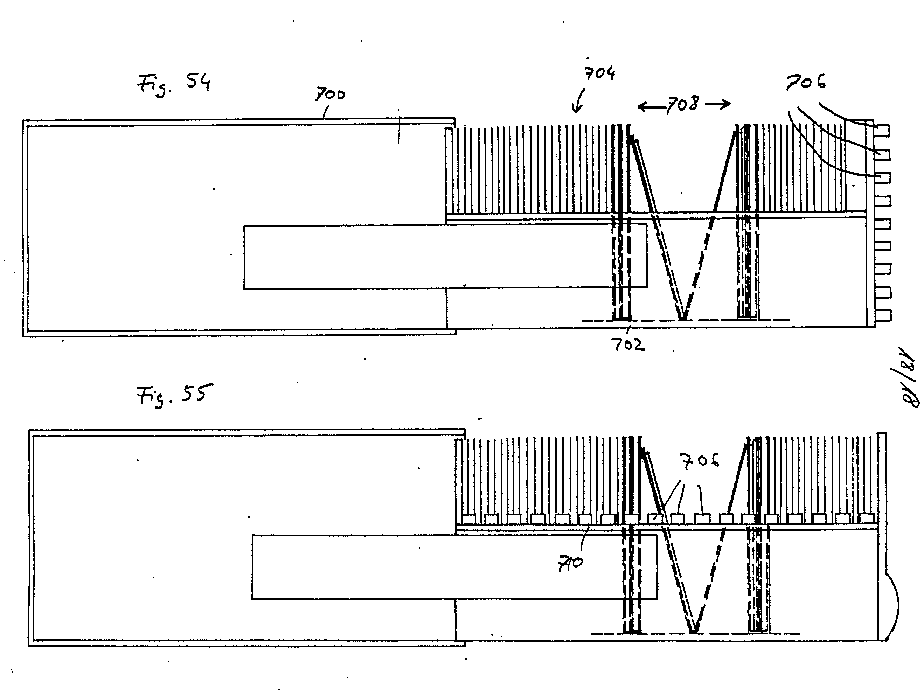

Fig. 51 ist ein Querschnitt durch einen Halter,

Fig. 52 und 53 zeigen Mitnehmer in Seitenansicht, und

Fig. 49 ist ein schematisierter Horizontalschnitt durch die geschlossene Vorrichtung.

Fig. 54 und 55 stellen in teilgeschnittener Seitenansicht Varianten dar.

Die Fig. 1 bis 10 beziehen sich auf eine erste Ausführungsform einer Vorrichtung zur Aufbewahrung von scheibenförmigen Datenträgern, wobei der Einfachheit halber auf "Compactdiscs", Kompakt- oder Digitalschallplatten mit Laserabtastung bezuggenommen wird.

Fig. 1 zeigt eine Vorrichtung im schematisch dargestellten Längsschnitt, und zwar geschlossen. Im Gehäuse 1 ist gleitbeweglich ein Schieber 2 aufgenommen, an den um ein Gelenk 3 schwenkbar ein "Tor" 4 oder Deckel angelenkt ist. In dem Gelenk ist eine Schenkelhalsfeder untergebracht, die das Tor in die weggeschwenkte Öffnungsposition vorspannt,

deren Winkellage durch einen Anschlag 5 bestimmt ist.
Die Gleitkopplung mit dem Gehäuse erfolgt über eine
Teleskopführung, damit der Schieber praktisch vollständig aus dem Gehäuse ausfahren kann; demgemäß ist noch
eine Zwischenschiene 6 auf beiden Seiten vorgesehen.
Der maximale Auszugsweg der Zwischenschiene wird durch
einen Anschlagnocken 16 fesgelegt, der in einem Gehäuseschlitz läuft. Rippen 15 des Gehäuses umgreifen beide
Schienenaußenkanten und halten so die Schienen im Gehäuse,
die ihrerseits mit ähnlichen Profilhaken den Schieber umgreifen. Dies ist am besten in der Querschnittdarstellung
nach Fig. 2 erkennbar.

Schieber 2 nebst Tor 4 werden von Druckfedern 7 aus
dem Gehäuse herausgestoßen, sobald durch Fingerdruck auf
die Taste 8 in Richtung des Pfeiles 9 der Sperrhaken 10
(vgl. Fig. 4) aus einer Falle herausgehoben wird, die als
Gehäusedurchbruch ausgebildet ist.

Die Compactdiscs 11 liegen einzeln in Plattenteilen
12, die mittels Zapfen 13 an den Schieber angelenkt sind
und so um Achsen 14 schwenken können. Eine alternative
Gelenkverbindung zwischen den Plattenteilen 12 und dem
Schieber 2 ist in Fig. 6 in Draufsicht, in Fig. 7 in Ansicht dargestellt: Die Endkante des Plattenteils weist
einfach angespritzte Schnappkrallen 23 auf, die beim Aufsetzen auf an den Schieber angespritzte Zapfen 22 aufspreizen, überschnappen und danach ein Gelenk bilden. -
Während Fig. 1 eine erste Ausführungsform eines solchen
Plattenteils erkennen läßt, zeigt Fig. 5 eine Variante,
die sich von jener durch einen versteifenden Umfangsrand 17, der nur an der vorderen Entnahmeseite des
Plattenteils weggelassen ist, unterscheidet. - Die
Plattenteile weisen an der Entnahmeseite einen Griffausschnitt 18 auf und in ihrem Zentrum einen Vorsprung 19, welcher verhindert, daß bei abruptem Öffnen, wenn man also nach Druck auf die Taste 8 losläßt und die Federn 7 voll wirken läßt, die so beschleunigten Compactdiscs 11 ausgeworfen werden. Die Einstecktiefe der discs wird begrenzt durch eine Anschlagleiste 20.

Fig. 4 zeigt in schematisierter Seitenansicht den geöffneten Behälter. Die Plattenteile werden dabei aufgefächert, und zwar durch Zusammenwirken des schwenkenden Tors 4 mit den Plattenteilen. Das Tor trägt nämlich nach innen ragende Zapfen 24, die von unten an Lappen 26 der Plattenteile 12 stoßen und sie anheben. Die Lappen sind lang genug, daß die Zapfen 24 trotz des Entlanggleitens an diesen wegen der unterschiedlichen Achsabstände stets im Eingriff mit ihnen bleiben. Beim Zurückschwenken des Tores wirken von oben ebenfalls an das Tor angeformte weitere Zapfen 25 auf die Lappen und bringen sie in die Parallellage zurück, falls die Schwerkraft nicht ausreicht oder der Behälter nicht in der gezeichneten Position benutzt wird; das Tor könnte dann mit seiner Frontplatte 27 an dem ihm nächstliegenden Plattenteil anstoßen, oder die Plattenteile könnten untereinander kollidieren. Alternativ könnte die Rückstellung der Plattenteile in ihre Parallellage auch durch Vorspannfedern oder andere Mittel bewirkt werden. - Das unterste Plattenteil bleibt ohnehin in seiner Ausgangslage, abgestützt auf die Anschläge 29.

Anstelle des Sicherungsnockens 19 könnte man auch auf den Plattenteilen Haftbeläge anbringen, wie bei 28 in Fig. 8 angedeutet. Die dort gezeichneten Plattenteile weichen auch sonst von denen der zuvor beschriebenen Ausführungsform ab; ihre entnahmeseitige Front ist mit abgewinkelten Beschriftungs- oder Etikettenflächen 30 versehen, die einander in der Aufbewahrungsposition überdecken, jedoch im aufgefächerten Entnahmezustand gut lesbar sind, wie man leicht erkennt.

Die Variante nach Fig. 9 stellt eine Ausführungsform dar, bei der die Plattenteile nicht nach oben, sondern nach unten auffächern (immer unter der Voraussetzung, daß die zeichnerisch dargestellte Lage auch die Gebrauchslage ist). Damit die Discs nicht herunterfallen, ist ein Anschlagrand 31 vorgesehen. Diese Ausführungsform hat den Vorteil, daß die Einsicht in den Fächer günstiger sein kann als bei der zuvorgeschilderten Ausführungsform, insbesondere auf die Randpartien 32 der Plattenteile (Fig. 10), die hier als Beschriftungs- oder Etikettenfelder gedacht sind.

Abgesehen von den Bauteilen, die ständig elastisch vorgespannt sind, wie die Federn 7, sind alle Bauteile vorzugsweise als Kunststoffspritzteile ausgebildet. Wie an sich bekannt, können die Außenseiten der Gehäuse 1 mit Ansätzen und Ausnehmungen komplementärer Profilgestaltung versehen sein, damit gleichartige Behälter formschlüssig zu größeren Einheiten verbunden werden können.

Die zweite Ausführungsform ist in Fig. 11-15 dargestellt.

In dem Gehäuse 100 ist gleitbeweglich ein Schieber 101 geführt. Zu diesem Zweck besteht der Schieber aus zwei Bodenplatten 109 und 110, die frontseitig durch eine Frontplatte 111 und rückseitig durch eine Rückplatte 108 miteinander verbunden sind. In den Freiraum 128 zwischen den beiden Bodenplatten ragt von beiden eine Stufe 102, und vom Gehäuseboden 129 her ragen zwei Führungsschienen 103 nach innen und übergreifen diese Stufen. Die Bodenplatten 109, 110 sind durch hochstehende Seitenkanten 112 versteift, die nahe dem inneren Schieberende in Wangen 113 übergehen, welche an rechtwinklig zu ihnen verlaufende Lappen 107 anschließen. Die Wangen 113 und die Lappen 107 haben eine Höhe derart, daß die lichte Weite des Gehäuses im wesentlichen ausgefüllt wird, wie in Fig. 15 erkennbar. Druckschraubenfedern 106 stützen sich einerseits an der Gehäuserückwand 131, andererseits an den Lappen 107 ab und drängen den Schieber aus dem Gehäuse heraus. In seiner Einschubstellung wird der Schieber 101 durch einen Riegel 105 gesichert, der in eine Ausnehmung 130 im Gehäuseboden 129 einrastet; der Riegel ist an einer Federtaste 104 angeformt und kann durch Anheben der Taste mittels Fingerdruck entriegelt werden; da der Schieber aus elastisch deformierbarem Kunststoff besteht, ist es ohne weiteres möglich, die Federtaste 104 aus dem Material der Bodenplatte 109 durch die in Fig. 12 erkennbaren Einschnitte zu separieren. Der Ausschubweg des Schiebers wird durch Anschläge begrenzt, die mit Gegenanschlägen im Gehäuse zusammenwirken.

In Lagerdurchbrüchen 132 der Wangen 113 sind Lagerzapfen 115 von Aufnahmeplatten 114 für je eine Kompaktschallplatte 125 (Compact disc) aufgenommen. Es sind hier insgesamt fünf Aufnahmeplatten übereinander angeordnet, und die einzelnen Aufnahmeplatten 114 unterscheiden sich durch die Form und Lage ihrer Hebelarme 116, 120, 121, 122 und 123. Der Hebelarm 116 der obersten Aufnahmeplatte 114 erstreckt sich im wesentlichen über die Breite des Schiebers zwischen den Federn 106; er weist an seinem Ende zwei sich seitlich wegerstreckende Stifte oder Haken 117 auf, an denen je eine Zugfeder 118 eingehangen ist. Die jeweils anderen Enden der Zugfedern 118 sind an Ösen 119 verankert, die von den Bodenplatten 109, 110 des Schiebers hochstehen. Wird demgemäß der Schieber 101 entriegelt und durch die Federn 106 aus dem Gehäuse 100 herausgeschoben, so wirkt auf den Hebelarm 116 ein Drehmoment, erzeugt durch die Vorspannung der Federn 118, und die oberste Aufnahmeplatte 114 wird in die in Fig. 15 dargestellte Position verschwenkt.

Bei dieser Schwenkbewegung werden auch die übrigen Aufnahmeplatten aufgespreizt, indem der Hebelarm 116 der obersten Platte auf die nebeneinander gestaffelt angeordneten Hebelarme 120, 121 und 122 einwirkt und diese mitnimmt. Da diese Hebelarme unterschiedliche Länge besitzen, ist ihr Aufspreizwinkel entsprechend geringer als der der obersten Platte 114. Für die unterste Aufnahmeplatte sind die Hebelverhältnisse für die Betätigung durch den Hebelarm 116 ziemlich ungünstig, und deshalb wird der Hebelarm 123 nicht vom Hebelarm 116, sondern von dem über ihm angeordneten Hebelarm 122 mitgenommen (vgl. Fig. 14). Die untersten drei Aufnahmeplatten weisen Ausschnitte 124 auf, damit die Zugfedern 118 Platz finden.

Die Lagesicherung der Schallplatten erfolgt durch zentrale Nabenfortsätze 126, von denen die Schallplatten abgehoben werden können, indem man sie im Bereich der frontseitigen Ausschnitte 127 der Aufnahmeplatten erfaßt. Ein Stützrand 133 der Aufnahmeplatten definiert ihren gegenseitigen Abstand in der Aufbewahrungsposition.

Die Fig. 16 bis 19 zeigen eine dritte Ausführungsform des Gegenstandes der Erfindung.

In dem Gehäuse 200, das wie in den zuvor beschriebenen Ausführungsbeispielen im wesentlichen rechteckige Grundrißform besitzt, sind nahe einer Seitenwandung 203 zwei Rohre teleskopartig ineinander gleitverschieblich gelagert. Das Innenrohr 201 ist mit einer Nase 211 in einem Schlitz 213 der Gehäusewand 203 geführt, wodurch eine Drehung des Rohres um seine Achse verhindert wird. Die Endkante 212 des Schlitzes 213 begrenzt den Gleitweg des Rohres 201. Das Außenrohr 202 ist von außen über das Innenrohr geschoben und trägt einen Kulissenstift 208, der durch einen Schlitz 209 des Innenrohres ragt. Die Lagesicherung beider Rohre im Gehäuse erfolgt durch an das Gehäuse angeformte Rippen 204. Das Innenrohr nimmt eine Schraubendruckfeder 207 auf, die sich einerseits an der Gehäuserückwand und andererseits an dem Kulissenstift 208 abstützt, wodurch das Außenrohr 202 in Ausschubrichtung vorgespannt wird. Mit dem Außenrohr 202 ist starr eine das Gehäuse verschließende Frontplatte 216 verbunden; sie trägt an ihrem dem Außenrohr abgewandten Ende eine Taste 205 mit einem Riegel 206, der in der Aufbewahrungsposition der Vorrichtung in einer Gehäuseöffnung 224 einrastet. Die Entriegelung erfolgt durch Druck auf die Taste 205, wobei sich die aus Kunststoff bestehenden Teile elastisch deformieren.

Mit dem Außenrohr 202 sind Wangen 217 verbunden, in deren Lagerbohrung die Lagerzapfen 218 von Aufnahmeplatten 214 drehbar gelagert sind. Die Lagerzapfen 218 sind an seitliche hochstehende Kanten 221 der Aufnahmeplatten angeformt, die die letzteren versteifen und ihre relative Lage in der Aufbewahrungsposition der Vorrichtung definieren. Die Schallplatten 220 stützen sich an einer mondförmigen Kante 222 ab und sind mittels Griffausschnitt 223 erfaßbar.

Nach Lösen der Verriegelung drückt die Feder 207 zunächst das Außenrohr 202 und die mit ihm verbundenen Bauteile nach außen. Wenn der Kulissenstift 208 auf die Unstetigkeitsstelle oder Schräge 210 trifft, wird auch das Innenrohr 201 mitgenommen (falls aufgrund der jeweils vorliegenden Reibungsverhältnisse das Innenrohr schon früher mitläuft, stört dies die Funktion nicht). Wenn die Nase 211 an der Endkante 212 des Schlitzes 213 anstößt und der Kulissenstift an der Stelle 210, so befinden sich die Aufnahmeplatten 214 vollständig außerhalb des Gehäuses. Die Druckfeder 207 wirkt jedoch noch immer und schiebt das Außenrohr noch weiter längs des Innenrohres, wobei der Kulissenstift 208 nun dem schräg verlaufenden Kulissenabschnitt 215 des Schlitzes 209 folgen muß und dabei das Außenrohr sowie alle mit ihm verbundenen Teile um seine Achse verdreht. Die Elemente 202, 217 und 216 machen diese Drehung vollständig mit, da sie starr mit dem Außenrohr 202 verbunden sind. Die Aufnahmeplatten 214 dagegen können sich in ihren Lagern unter der Wirkung der Schwerkraft bewegen und folgen der Drehung des Außenrohres erst dann, wenn an sie angeformte Fortsätze 219 am Außenrohr 202 anstoßen, wobei die Abmessungen dieser Fortsätze für die einzelnen Aufnahmeplatten 214 derart unterschiedlich gewählt sind, daß sich im geöffneten Zustand der Vorrichtung eine fächerartige Konfiguration einstellt, wie sie in Fig. 19 gezeichnet ist. Damit die Zeichnungen nicht zu unübersichtlich werden, wurden die Fortsätze 219 nur für die mittlere Aufnahmeplatte dargestellt; die Ausbildung für die übrigen Platten ergibt sich danach ohne weiteres, und es versteht sich auch, daß die Fortsätze längs der Läng des Außenrohres 202 gestaffelt angebracht sein können und die einzelnen Aufnahmeplatten Auschnitte für den Durchtritt der Fortsätze von über ihnen liegenden Platten aufweisen können. Man erkennt, daß die oberste Aufnahmeplatte die Drehung des Rohres 202 vollständig mitgemacht hat, so daß sie alternativ auch unmittelbar mit diesem oder/und mit der Frontplatte 216 verbunden sein könnte.

Um die Vorrichtung wieder in die Aufbewahrungsposition zurückzubringen, genügt ein leichter Druck auf die Frontplatte 216, um die Schwenkbewegung des Außenrohres 202 und der mitverdrehten Bauteile rückgängig zu machen, wobei zugleich leicht in Richtung Gehäuserückwand gedrückt werden soll, damit der Kulissenstift 208 möglichst reibungsarm in dem Kulissenabschnitt 215 gleitet. Bei Erreichen der Horizontallage wird dann die ausgefahrene Baugruppe einfach hineingeschoben, bis der Riegel 206 wieder einrastet.

- 13 -

Die ersten drei Ausführungsbeispiele wurden in aller Ausführlichkeit erläutert, und viele Details, insbesondere die Ausbildung der Führungen, Anschläge, Ausschubfedern und so weiter lassen sich analog bei den nachstehend zu beschreibenden Vorrichtungen analog verwenden. Es wird daher nur auf die jeweils charakteristischen Merkmale eingegangen.

Die Vorrichtung gemäss Fig. 20 bis 22 umfasst ein Gehäuse 300 mit zwei untereinander gleichen Schiebern 302. Die Schieber sind teleskopartig mittels Führungsschienen 304 relativ zu dem Gehäuse gleitverschieblich, und zwar im wesentlichen um einen der Gehäusetiefe entsprechenden Hub. An den Schieber ist jeweils ein deckelartiger Spreizarm 306 angelenkt, der von einer Feder in die Öffnungsposition vorgespannt ist oder in diese zwangsgeführt ist. Zwischen Schieber 302 und Spreizarm 306 ist ein harmonikaartiger Balg 308 aus dünnem, flexiblen Material, beispielsweise PVC-Folie, aufspannbar, wobei die Faltenabschnitte 310 die Öffnungsbewegung begrenzen. Dabei öffnen sich Taschen 312, an die nahe ihren Aussenkanten und im Zentrum einwärts gerichtete Prägungen angeformt sind, so dass die aufzubewahrenden Platten von den Prägungen 314 nur in ihren spurfreien Bereichen berührt werden können.- Um zu verhindern, dass ein Benutzer die Taschen mit zuviel Material befrachtet, etwa umfangreichen zu den Platten gehörenden Drucksachen, ist dafür gesorgt, dass eine überladene Vorrichtung nicht mehr geschlossen werden kann. Zu diesem Zweck weisen die Seitenholme 316 der Schieber einen Schlitzdurchbruch 318 auf, in den von der Führungsschiene 304 ein Sperrstift nach innen ragt. Lässt sich der beim Aufspreizen gebildete Fächer korrekt schliessen, greift ein nach aussen ragender Steg 320 des Spreizarms unter diesen Stift 322, und der Schieber lässt sich einschieben; andernfalls stösst die Endkante 324 des Stegs an den Stift oder steht sogar darüber, und ein Schliessen der Vorrichtung ist nicht mehr möglich.

- 14 -

Bei der Ausführungsform nach Fig. 23 bis 25 trägt der im Gehäuse 330 gleitverschieblich geführte Schieber 332 zwei Lagerböcke 334, in denen übereinander um horizontale Achsen schwenkbar vier Disc-Halter 336, 337, 338 und 339 gelagert sind. Jeder Halter weist einen Halteschlitz 340 mit durch eine Abrundung 342 zentrierend wirkenden Schlitzboden auf, in die jeweils eine Disc 344 seitlich einsteckbar ist. Der oberste Halter 336 läuft beim Öffnen der Vorrichtung mit einem Hebelarm 346 auf einen gehäuseseitigen Anschlag 348, wobei er nach oben ausgelenkt wird. Sein nach innen ragender Steuerarm 350 drückt dabei auf einen Steuerarm 352 des Halters 337, und diese Bewegung wird auf die übrigen Steuerarme 354 bzw. 356 der verbleibenden Halter so übertragen, dass jeder Halter um von oben nach unten kleiner werdende Winkel verschwenkt wird (Fig. 24).

Die Fig. 26 bis 28 stellen die Anwendung der Erfindung bei einer Vorrichtung zum Aufbewahren von Magnetbandkassetten 360 dar. Im Gehäuse 362 ist ein Schieber 364 zwischen Anschlägen gleitbeweglich geführt und von einer Druckfeder 366 nach aussen vorgespannt; in der Schliessposition ist der Schieber durch eine manuell auslösbare Vorrichtung verriegelt.- Im Schieber sind um Zapfen 368 in den Schieberseitenwangen 370 schwenkbar Kassettenhalter 372 gelagert, an die Auslenkhebel 374 bzw. 376 angeformt sind. Die Feder 366 wirkt nicht unmittelbar auf den Schieber, sondern auf einen relativ zu diesem im Gehäuse in gleicher Richtung gleitverschieblichen Bügel 378. Dieser Bügel hat einen grösseren Ausschubhub als der Schieber selbst und kann deshalb die Kassettenhalter durch Druck auf deren Auslenkhebel in die bequem zugängliche Entnahmeposition gemäss Fig. 26 schwenken. Zwar sind hier nur zwei Kassettenhalter gezeigt, doch versteht es sich, dass man die Vorrichtung auf eine grössere Anzahl erweitern kann.

Fig. 29 und 30 zeigen wieder eine für Platten bestimmte Vorrichtung. Aus dem Gehäuse 380 ist ein Schieber 382 von einer Feder herausschiebbar, im eingeschobenen Zustand aber durch eine Verriegelung gesichert, die mittels einer Lösetaste 384 entriegelbar ist. Bei ausgefahrenem Schieber spreizen sich die Plattenteile 386 voneinander ab, etwa durch eingelegte V-förmige Blattfedern, so dass jede Disc gut zugänglich ist. Beim Wiedereinschub treffen die Steuerkanten 388, die an die beiden äusseren Plattenteile angeformt sind, auf schräg einwärts bezüglich des Gehäuses verlaufende Keilflächen, 390 so dass die Plattenteile wieder eingefaltet werden und im Gehäuse Platz finden.

Fig. 31 zeigt eine Variante, die in ganz ähnlicher Weise funktioniert, bei der jedoch die Achse, um die die Aufspreizung erfolgt, senkrecht zur Schieberbewegungsrichtung verläuft, anstatt parallel dazu, wie dies in Fig. 29 vorgesehen war.

Gemäss Fig. 32 und 33 hat der aus dem Gehäuse 392 ausfahrbare Schieber 394 einen inneren, in der Draufsicht U-förmigen Bügel 396, an den ein äusserer, den aufspreizbaren Plattenhalterstapel 398 tragender Winkel 400 um etwa $90^{\circ}$ schwenkbar angelenkt ist. Fig. 32 zeigt die relative Lage der Teile kurz vor vollständigem Oeffnen der Vorrichtung, und Fig. 33 zeigt die Offenposition. Man erkennt an den inneren Bügel 396 angeformte Steuerzapfen 402, die beim Zurückschwenken des Winkels im Gegenuhrzeigersinn gemäss Fig. 33 den dort links gezeichneten Halter so abstützt, dass der Schieber in das Gehäuse rückschiebbar ist; die übrigen Plattenhalter folgen durch Schwerkraftwirkung.

In Weiterbildung dieser Lösung kann man den äusseren Winkel auch, wie in Fig. 34 dargestellt, um $180^{\circ}$ schwenkbar machen. Damit hier die Discs nicht herunterrutschen können, hat jeder Halter 404 eine das Loch der Disc durchsetzende Nabe 406, die allerdings nur bei einem der Halter angedeutet ist.

Die Vorrichtung nach Fig. 35 bis 37 umfasst ein Gehäuse 410 mit einem in die Oeffnungsposition (Fig. 35 und 36) federvorgespannten, im Gehäuse verriegelbaren und manuell entriegelbaren rahmenartigen Schieber 412. In ihm ist um eine in der Symmetrieebene liegende Achse 414 drehbar ein Bügel 416 gelagert, der die aufspreizbaren Disc-Halter 418 trägt. Deren Aufspreizwinkel wird durch Anschlagstifte 420 an der Schieberfrontwand 422 begrenzt. An ihrem gehäuseinnenseitigen Ende trägt die Achse 414 einen Steuerstern 424, der beim Einschub des Schiebers auf Steuerkeile 426 aufläuft, welche an die Ober- und/oder Unterseite des Gehäuseinnenraums angeformt sind und eine Steuerschnecke ausbilden, die den Steuerstern zwangsweise verdreht und somit den Schieber in die Schliessposition bringt, in der er dann einschiebbar ist. Die Anschlagstifte sorgen dabei dafür, dass die jeweils untersten Halter abgestützt sind, während die oberen schwerkraftbedingt zurückfallen.

Einen ähnlich rahmenförmigen Bügel 430 weist auch die Vorrichtung gemäss Fig. 38 und 39 auf. Eine die Disc-Halter 432 tragende Welle 434 ist mit einem Ritzel 436 versehen, das mit einer Zahnstange 438 kämmt. Die Zahnstange ist einerseits an einem an den Schieberseitenholm 440 angeformten Stift 442, andererseits an einer ebenfalls an dem Seitenholm befestigten Blattfeder 444 abgestützt. In der Offenposition greift ein an die Zahnstange angeformter Haken 446 in ein im Gehäuseboden 448 vorgesehenes Loch 450. Drückt man nun auf die Schieberfrontwand, rollt das Ritzel auf der Zahnstange ab, bis die Welle 434 um etwa $90^0$ im Gegenuhrzeigersinne verdreht worden ist. Dann stösst das freie Ende der Zahnstange gegen einen, an der Innenseite des Holms 440 angeformten Keil 452, kippt dabei um den Stift 442 und löst sich somit aus dem Loch 450. Jetzt kann der Schieber eingeschoben werden. Beim Oeffnen laufen die Vorgänge entsprechend in umgekehrter Reihenfolge ab.- Es ist darauf hinzuweisen, dass der Stift 442 vom Holm nach innen ragt und die Drehung des Ritzels nicht behindert.

Bei der Ausführungsform nach Fig. 40 bis 42 sind die Disc-Halter 460 beidseits an je zwei Parallelogrammlenker 462, 464 angelenkt, die ihrerseits an die Bodenplatte 466 des Schiebers 468 angelenkt sind. Der unterste Disc-Halter 460' greift mit zwei Zapfen 470 hinter nach innen einspringende Leisten 472 im Bereich der offenen Front des Gehäuses 474. Wenn beim Ausschub des Schiebers die Zapfen auf diese Leisten treffen (Fig. 40), sind die Disc-Halter noch dicht gepackt im Schieber. Die den Schieber auswärts drückende Feder (nicht gezeigt) lässt nun die Zapfen längs der Leisten hochgleiten, wodurch der Parallelogrammmechanismus entfaltet wird (Fig. 41) und die einzelnen Discs jetzt gut zugänglich sind.

Bei der Variante gemäss Fig. 43 ist als oberstes Element 476 des Parallelogrammsystems eine Baugruppe vorgesehen, die einen Schutzdeckel 478 und die an diesen angeformte Frontwand 480 umfasst, die die offene Gehäusefront in der Schliessposition abdeckt. Da auf diese Weise in der Offenposition auch der Schieberboden von vorn und oben zugänglich ist, kann er als Dischalter ausgebildet werden.

In der Variante gemäss Fig. 44 schliesslich sind alle Disc-Halter mit Frontstegen 482 versehen, deren Dicke so bemessen ist, dass sie einander in der Schliessposition der Vorrichtung berühren und eine jalousieartig ausgebildete "Frontwand" bilden; hier sind also sowohl das oberste Element des Parallelogrammsystems als auch der Schieberboden als Disc-Halter verwendbar.

Die Ausführungsform nach Fig. 45 bis 48 umfasst ein Gehäuse 500, relativ zu dem ein im Querschnitt im wesentlichen umgekehrt U-förmiger Schieber 502 federvorgespannt verschieblich ist. Im Schieber sind um Zapfen 504 aufspreizbar vier Disc-Halter 506 gelagert, an die ähnlich wie in Fig. 44 Frontwandabschnitte 508 angeformt sind, welche im Schliesszustand die offene Gehäusefront abdecken (Fig. 46). In dem vom Schieber umschlossenen Hohlraum befinden sich Blattfedern 510, die Steuerarme 512 an den beiden äusseren Disc-Haltern einwärts drücken, welche ihrerseits die Steuerarme 514 der beiden inneren Disc-Halter mitnehmen, bis im Aufspreizzustand (Fig. 47) alle Steuerarme einander berühren. An die beiden äusseren Disc-Halter sind Keilfortsätze 516 angeformt, die beim Einschub des Schiebers auf die senkrecht stehenden Gehäusewände 518 auflaufen und die Disc-Halter gegen die Vorspannung der Blattfedern in die Schliessposition einwärts drücken. Die Spitzen 520 der beiden Keilfortsätze berühren dabei einander. Ausschnitte 522 der Halter ermöglichen, eine Disc 524 an ihrer Aussenkante zu erfassen und zu entnehmen; ein Lappen 526 der Disc-Halter hält die Disc sicher.

Die Ausführungsform nach Fig. 49 bis 53 umfasst ein Gehäuse 600, in dem wie zuvor ein Schieber 602 gleitverschieblich ist; in Fig. 49 ist das Gehäuse zur Vereinfachung nicht gezeichnet. Fünf Disc-Halter 604 sind ringbuchartig an gekrümmten Lagerleisten 606 eingehangen. Im gehäuseseitigen Schieberbereich ist quer zur Ausschubrichtung eine Welle 608 gelagert, die zwei Hebelarme 610 aufweist, an denen je eine Zugschraubenfeder 612 angreift; bei geöffnetem Schieber wird die Welle um einen durch nicht gezeigte Anschläge vorgegebenen Winkel verdreht.

Längs der Welle sind zwei Hebel 614 gemeinsam verschieblich, und ein längs der Welle verlaufender, an sie angeformter Keil 616 nimmt die Hebel bei ihrer Drehung mit, wobei einer der Hebel (Fig. 52) drehfest mit der Welle ist, während der andere (Fig. 53) mit Winkelspiel — Sektorausnehmung 618 — versehen ist und dem ersten Hebel nachläuft.

- 19 -

0112966

Die Verschiebung der Hebel erfolgt mittels einer Wähltaste 620, die sich parallel zum Schieberboden zur Front hin erstreckt und unter der Schieberfrontwand herausragt. In der Schliessposition der Vorrichtung liegen die Arme beider Hebel 614 unterhalb aller Disc-Halter. Die Disc-Halter weisen gestaffelt Durchtrittsausschnitte auf, so dass bei Drehung der Welle zunächst der Hebel 614 gemäss Fig. 52 alle über ihm liegenden, nicht durch solche Durchtrittsausschnitte freigegebenen Disc-Halter verschwenkt und danach der Hebel 614 gemäss Fig. 53 den nächsten darunterliegenden Halter um einen kleineren Winkel hebt, während die übrigen Disc-Halter liegenbleiben.- Nach dem Schliessen der Vorrichtung kann die Taste verstellt werden, um einen andern Halter anzuwählen.

Die Figuren 54 und 55 stellen Ausführungsformen dar, bei denen ebenfalls immer nur eine bestimmte, ausgewählte Compactdisc leicht erfassbar präsentiert wird, während die übrigen in kaum zugänglicher, dicht gestapelter Lage bleiben.

Gemäss Fig. 54 ist in einem Gehäuse 700 gleitbeweglich zwischen Anschlägen ein federvorgespannter Schieber 702 aufgenommen, in dem stehend dicht gedrängt Aufnahmetaschen 704 für je eine Compactdisc untergebracht sind. Jeder Tasche ist eine Wähltaste 706 zugeordnet, die sich auf der Aussenseite der Schieberfrontwand befinden und bei geschlossener Vorrichtung zugänglich sind. Die Tiefe des Gehäuses und des Schiebers sind so bemessen, dass beide um die Oeffnungsbreite 708 einer Tasche tiefer sind als der Gesamtdicke aller geschlossenen Taschen entspricht. Durch Betätigen einer Taste wird der Schieber entriegelt und aus dem Gehäuse ausgeschoben, wobei die der betreffenden Taste zugeordnete Tasche sich öffnet. - Bei der Ausführungsform nach Fig. 55 sind die auf einer seitlichen Leiste 710 angeordneten Tasten erst zugänglich, wenn der Schieber bereits ausgeschoben ist, was zwar zwei statt nur einen Betätigungshandgriff erfordert, aber eine einfachere Konstruktion für das Wählsystem ermöglichen könnte.

DIPL.-ING. H. MARSCH 1931-1979
DIPL.-ING. K. SPARING
DIPL.-PHYS. DR. W. H. RÖHL
PATENTANWÄLTE
ZUGL. VERTRETER BEIM EUROPÄISCHEN PATENTAMT

4000 DÜSSELDORF
RETHELSTRASSE 123
POSTFACH 140268
TELEFON (0211) 671034

0112966

idn inventions and development                    49/91
   of novelties ag
CH - 7002 Chur
-------------------------------------------

Patentansprüche
-------------------------------------------

1)    Aufbewahrungsvorrichtung für flache Aufzeichnungsträger, wie Compact-Discs, Disketten oder Magnetbandkassetten, gekennzeichnet durch die folgenden Merkmale:

a) ein Gehäuse (1, 100, 200) ist für die Aufnahme einer Mehrzahl von Aufzeichnungsträgern (11, 125, 220) in dichter Packung ausgebildet,

b) ein Transportorgan (2, 101, 201 und 202) ist für die Förderung der Aufzeichnungsträger aus dem Gehäuse heraus vorgesehen, und

c) eine Aufspreizvorrichtung (12/26/24, 114/116/118, 208/215/217) ist zum Präsentieren der herausbeförderten Aufzeichnungsträger in bequeme Entnahmeposition vorgesehen.

2)    Aufbewahrungsvorrichtung nach Anspruch 1, dadurch gekennzeichnet, daß das Gehäuse (1, 100, 200) im wesentlichen rechteckigen Grundriß aufweist und die Aufzeichnungsträger (11, 125, 220) in ihm parallel zu den größten Gehäuseflächen dicht gepackt gestapelt unterbringbar sind.

3)    Aufbewahrungsvorrichtung nach Anspruch 1 oder 2, dadurch gekennzeichnet, daß das Transportorgan einen translatorisch aus dem Gehäuse herausbewegbaren Schieber (2, 101, 201 und 202) umfaßt.

- 2 -

0112966

4)   Aufbewahrungsvorrichtung nach Anspruch 3, dadurch gekennzeichnet, daß der Schieber (2, 101) rahmenförmig ausgebildet ist.

5)   Aufbewahrungsvorrichtung nach Anspruch 4, dadurch gekennzeichnet, daß an den rahmenförmigen Schieber (2) ein Deckel (4) angelenkt ist, der in der Aufbewahrungsposition eine Gehäuseöffnung verschließt, durch die der Schieber beweglich ist, und der in der Entnahmeposition weggeschwenkt ist.

6)   Aufbewahrungsvorrichtung nach Anspruch 4, dadurch gekennzeichnet, daß der Schieber (101) eine Stirnwand (111) aufweist, die in der Aufbewahrungsposition die Gehäuseöffnung abdeckt, durch welche der Schieber bewegt wird.

7)   Aufbewahrungsvorrichtung nach Anspruch 3, dadurch gekennzeichnet, daß der Schieber (201 und 202) rohrförmig ausgebildet ist.

8)   Aufbewahrungsvorrichtung nach Anspruch 7, dadurch gekennzeichnet, daß der rohrförmige Schieber zwei teleskopartig relativ zueinander gleitverschiebliche und gemeinsam relativ zum Gehäuse gleitverschiebliche Rohre (201, 202) umfaßt.

9)   Aufbewahrungsvorrichtung nach einem der Ansprüche 3 bis 8, dadurch gekennzeichnet, daß an den Schieber (2, 101, 202) plattenförmige Halter (12, 114, 214) für je einen Aufzeichnungsträger (11, 125, 220) angelenkt sind.

0112966

10)   Aufbewahrungsvorrichtung nach Anspruch 9, dadurch gekennzeichnet, daß die Halter (12, 114, 214) in eine Entnahmeposition aufspreizbar sind, in der sie fächerartig von ihren Anlenkstellen am Schieber (2, 101, 202) abstehen.

11)   Aufbewahrungsvorrichtung nach Anspruch 9, dadurch gekennzeichnet, daß die Anlenkachsen aller Halter (12, 114, 214) zueinander parallel sind.

12)   Aufbewahrungsvorrichtung nach Anspruch 11, dadurch gekennzeichnet, daß die Achsen sich senkrecht zur Verschieberichtung des Schiebers (2, 101) erstrecken und parallel zu den Hauptebenen der Aufzeichnungsträger (11, 125) in deren Aufbewahrungsposition verlaufen.

13)   Aufbewahrungsvorrichtung nach Anspruch 1, dadurch gekennzeichnet, daß die Achsen parallel zur Verschieberichtung des Schiebers (201 und 202) verlaufen.

14)   Aufbewahrungsvorrichtung nach Anspruch 5 und 12, dadurch gekennzeichnet, daß der Deckel (4) Steuerorgane (24, 25) trägt, mittels denen bei der Schwenkbewegung des Deckels die Halter (12) in ihre Entnahmeposition zwangsgeführt sind.

15)   Aufbewahrungsvorrichtung nach Anspruch 8, 9 und 13, dadurch gekennzeichnet, daß eines der Rohre (202) relativ zu dem anderen (201) um einen vorgegebenen Winkel in der Entnahmeposition verdreht ist und daß die Halter (214) mittels dieser Winkeldrehung aufspreizbar sind.

- 4 -

0112966

16) Aufbewahrungsvorrichtung nach Anspruch 12, dadurch gekennzeichnet, daß die Halter (114) mittels einer Federanordnung (118) in ihre Entnahmeposition vorgespannt sind und durch Auflaufen an einer Gehäusesteuerkante entgegen der Federvorspannung in die Aufbewahrungsposition rückdrehbar sind.

17) Aufbewahrungsvorrichtung nach Anspruch 3, dadurch gekennzeichnet, dass an den Schieber ein Spreizarm (306) angelenkt ist, mittels dem ein harmonikaartiger, mit Aufnahmetaschen (312) versehener Faltenbalg entfaltbar ist.

18) Aufbewahrungsvorrichtung nach Anspruch 17, gekennzeichnet durch eine Sperreinrichtung zum Sperren des Schiebereinschubs bei überfülltem Faltenbalg.

19) Aufbewahrungsvorrichtung nach Anspruch 3, dadurch gekennzeichnet, dass im Schieber (332) aufspreizbar schwenkbeweglich Halteklammern (336-339) gelagert sind, in die je eine Aufzeichnungsplatte einsteckbar ist.

20) Aufbewahrungsvorrichtung nach Anspruch 19, dadurch gekennzeichnet, dass die Halteklammern mittels einer Zwangssteueranordnung aufspreizbar sind.

21) Aufbewahrungsvorrichtung nach Anspruch 3, dadurch gekennzeichnet, dass dem Schieber ein relativ zu ihm in gleicher Richtung bewegliches Aufspreizorgan zugeordnet ist, das im Schieber übereinander angeordnete Träger (372) relativ zum Schieber (364) aufspreizend verschwenkt.

- 5 -

22)     Aufbewahrungsvorrichtung nach Anspruch 4, dadurch gekennzeichnet, dass taschenartige Halter (386) für je einen Aufzeichnungsträger vorgesehen sind, die in Offenposition des Schiebers aufgeweitete Einschubschlitze begrenzen, durch Einschieben des Schiebers in das Gehäuse (380) jedoch in eng gepackte Schliessposition rückführbar sind.

23)     Aufbewahrungsvorrichtung nach Anspruch 2, dadurch gekennzeichnet, dass die Aufzeichnungsträger in einem Transportorgan unterbringbar sind, das bei geöffneter Vorrichtung die Aufzeichnungsträger um eine zu ihrer Hauptebene parallele Achse verschwenkt.

24)     Aufbewahrungsvorrichtung nach Anspruch 23, gekennzeichnet durch einen Schwenkwinkel von 90$^\circ$.

25)     Aufbewahrungsvorrichtung nach Anspruch 23, gekennzeichnet durch einen Schwenkwinkel von etwa 180$^\circ$.

26)     Aufbewahrungsvorrichtung nach Anspruch 23, gekennzeichnet durch eine Getriebeanordnung für die Schwenkbewegung.

27)     Aufbewahrungsvorrichtung nach Anspruch 26, dadurch gekennzeichnet, dass die Getriebeanordnung nach Art eines Schneckengetriebes ausgebildet ist.

28)     Aufbewahrungsvorrichtung nach Anspruch 26, dadurch gekennzeichnet, dass die Getriebeanordnung ein Zahnstangen-Ritzel-Getriebe umfasst.

29)     Aufbewahrungsvorrichtung nach Anspruch 3, dadurch gekennzeichnet, dass an den Schieber Parallelogramm-Lenker angelenkt sind, an die plattenartige Halter für je einen Aufzeichnungsträger angelenkt sind, und dass Steuerorgane zum Aufspreizen des so gebildeten Parallelogrammsystems beim Oeffnen des Schiebers vorgesehen sind.

30) Aufbewahrungsvorrichtung nach Anspruch 29, dadurch gekennzeichnet, dass der Schieber eine Frontwand aufweist.

31) Aufbewahrungsvorrichtung nach Anspruch 29, dadurch gekennzeichnet, dass der Schieber einen Schieberboden aufweist und dass an den dem Schieber abgewandten Lenkerenden eine Baugruppe angelenkt ist, die eine Frontwand zum Abdecken der Gehäuseöffnung bei eingeschobenem Schieber umfasst, und dass der Schieberboden als Auflager für einen der Aufzeichnungsträger ausgebildet ist.

32) Aufbewahrungsvorrichtung nach Anspruch 29, dadurch gekennzeichnet, dass jeder Halter einen frontseitigen Steg aufweist, und dass bei eingeschobenem Schieber die Stege aller Halter gemeinsam eine Abdeckung für die offene Gehäusefrontseite bilden.

33) Aufbewahrungsvorrichtung nach Anspruch 3, dadurch gekennzeichnet, dass an den Schieber um zur Schieberausschubrichtung parallele Achsen aufspreizend ausschwenkbare Halter für je einen Aufzeichnungsträger angelenkt sind, die von einer Feder in Aufspreizposition vorgespannt sind und durch eine beim Einschub des Schiebers mit der Gehäusefront in Wirkverbindung tretende Keilanordnung einfaltbar sind.

34) Aufbewahrungsvorrichtung nach Anspruch 1, dadurch gekennzeichnet, dass ein Wählorgan (614, 620) vorgesehen ist, mittels dem ein ausgewählter Aufzeichnungsträger präsentierbar ist, während die übrigen Aufzeichnungsträger dicht gepackt verbleiben.

35) Aufbewahrungsvorrichtung nach Anspruch 3, dadurch gekennzeichnet, dass der Schieber eine Bodenplattenanordnung umfasst, mittels der er längs einer Gehäusebodenplatte geführt ist.

36) Aufbewahrungsvorrichtung nach Anspruch 18, dadurch gekennzeichnet, dass die Sperreinrichtung als Niederhalteeinrichtung für den Spreizarm ausgebildet ist, mittels der dieser bei der Herausförderung aus dem Gehäuse im Abstand von dessen Deckwand gehalten ist.

37) Aufbewahrungsvorrichtung nach Anspruch 3, dadurch gekennzeichnet, dass für jeden Aufzeichnungsträger eine balgartig faltbare Tasche vorgesehen ist.

38) Aufbewahrungsvorrichtung nach Ansprüchen 17 und 37, dadurch gekennzeichnet, dass der Faltenbalg aus einem einstückigen Zuschnitt mit Klebe- bzw. Schweissnähten gefertigt ist.

39) Aufbewahrungsvorrichtung nach Anspruch 37, dadurch gekennzeichnet, dass die Tasche aus einer Kunststoff-Folie gefertigt ist.

40) Aufbewahrungsvorrichtung nach Anspruch 1, dadurch gekennzeichnet, dass das Transportorgan mittels einer Federanordnung in die herausgeförderte Position vorgespannt ist, und dass das Transportorgan in der Aufbewahrungsposition im Gehäuse mittels einer manuell auslösbaren Verriegelungsanordnung gehalten ist.

41) Aufbewahrungsvorrichtung nach Anspruch 40, dadurch gekennzeichnet, dass die Aufzeichnungsträger auf fächerartig aufspreizbaren Haltern unterbringbar sind und dass die Aufspreizung durch die Federanordnung über eine Zwangssteuerungseinrichtung bewirkt wird.

42) Aufbewahrungsvorrichtung nach Anspruch 1, dadurch gekennzeichnet, dass Aufnehmer für je einen Aufzeichnungsträger vorgesehen sind, die mindestens einen Randbereich der Aufzeichnungsträger freilassen.

43)     Aufbewahrungsvorrichtung nach Anspruch 42, bei der die Aufnehmer als plattenartige Halter ausgebildet sind, dadurch gekennzeichnet, dass die Halter Ausschnitte zum Freilegen des Randbereichs aufweisen.

44)     Aufbewahrungsvorrichtung nach Anspruch 3, dadurch gekennzeichnet, dass der Schieber je eine nach oben öffnende Tasche für je einen Aufzeichnungsträger stehend in dichter Packung enthält, und dass eine Wähleinrichtung vorgesehen ist, mittels der mindestens eine Tasche bestimmbar ist, die bei aus dem Gehäuse herausbefördertem Schieber geöffnet präsentiert wird.

45)     Aufbewahrungsvorrichtung nach Anspruch 44, bei der der Schieber eine die offene Gehäusefrontseite abdeckende Frontwand aufweist, dadurch gekennzeichnet, dass als Betätigungsorgane für die Wähleinrichtung Tasten auf der Aussenseite der Frontwand vorgesehen sind, die jeweils einer Tasche zugeordnet sind.

46)     Aufbewahrungsvorrichtung nach Anspruch 44, dadurch gekennzeichnet, dass Betätigungsorgane für das Wählen der mindestens einen Tasche auf einem sich in Schieberauszugsrichtung erstreckenden, neben den Taschen angeordneten Holm in räumlicher Zuordnung zu den Taschen vorgesehen sind.

47)     Aufbewahrungsvorrichtung nach Anspruch 45 oder 46, dadurch gekennzeichnet, dass die Betätigungsorgane Drucktasten sind.

Fig. 2

Fig. 1

Fig. 3

1/18

0112966

Fig. 5

Fig. 6    Fig. 7

Fig. 4

0112966

Fig. 8

11 12

30

30

28 28

Fig. 9

Fig. 10

32

32

3.

3.

3/18

0112966

Fig.11

106 117    120  121  122    117 131 118
      108 116  106      107
                         115
115                      100
118                      124
124                      125
                    133
        126
                    127
                    112
     -129-
111  102  203  101  104

Fig. 12

108    101
107        107
132
113
119    102
110    -128.-
112'
111    104

4/48

0112966

Fig. 13

Fig. 14

Fig. 15

5/18

0112966

Fig. 16

Fig. 17

0112966

Fig. 18

Fig. 19

306

322

304  Fig.21  302

314  314  Fig.22  314

312

300

308

310

-312-

310

320

306  -312-

324

302

Fig.20

304

318  316  302

0112966

8/18

0112966

9/18

Fig. 25

350   346                    348

352

354

356

330

340

348   336        337
346              338

350

344

339

Fig. 24              332

330                    332

334

342

334

Fig. 23

Fig. 26

360

372

360

372

366

368

362        378        364

Fig. 27

374

376

368        370

Fig. 28

366

378

0112966

11/18

Fig.30

←386

Fig.29

- 380 -

386

390

388

382

384

Fig.31

Fig. 32

394

−392−

Fig. 33

396

−392−

398

402

394

400

Fig. 34

406

404

Fig. 35    410    412

426

Fig. 37    424

418
416

Fig. 36

Fig. 38

334

432    436         440

444
                                    430

448        436          452

           4

450    446    438    442    440

Fig. 39

Fig. 40

Fig. 41

Fig. 42

Fig. 43

Fig. 44

Fig. 45

Fig. 46

Fig. 47

Fig. 48

0112966

17/18

Fig.51

Fig.50

606

604

610

620

608

612    600

602

610    608    614

602

606

604

Fig.49

620

616    618    614

614

Fig.52    Fig.53

0112966

18/18

706

708

704

702

700

Fig. 54

706

708

710

Fig. 55

**0112966**

Nummer der Anmeldung

Europäisches Patentamt

# EUROPÄISCHER RECHERCHENBERICHT

EP 83 10 8476

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 278 529 (S. BEDER)<br><br>* Seite 1, Spalte 1, Zeilen 3-31; Seite 2, Spalte 2, Zeilen 22-30; Figuren 1, 2 * | 1-4,6,<br>11 | G 11 B 23/02<br>G 11 B 1/02 |
| | --- | | |
| A | US-A-2 720 438 (J.K. MUSICK)<br>* Ansprüche 1-3 * | 1 | |
| | --- | | |
| A | FR-A-1 343 653 (S.A.R.L. SELECTION DU READER'S DIGEST)<br>* Figur 1 * | 1 | |
| | --- | | |
| A | DE-A-2 307 410 (P. FÜWESI)<br>* Ansprüche 1, 4 * | 34 | |
| | --- | | **RECHERCHIERTE SACHGEBIETE (Int. Cl. ³)** |
| A | DE-A-2 149 690 (TROMA PLASTIC)<br>* Seite 1, Zeile 1 - Seite 3, Zeile 12; Figur 1 * | 17 | |
| | --- | | A 47 B 81/06 |
| A | US-A-2 261 806 (B.E. HILLS)<br>* Figuren 2, 3 * | 17 | G 11 B 1/02<br>G 11 B 23/00 |
| | --- | | |
| A | DE-C-1 141 092 (L. KEFER)<br>* Anspruch 1; Figur 1 * | 19 | |
| | --- | | |
| A | FR-A-2 127 857 (G. KIEVES)<br><br>* Figuren 2, 5 * | | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 27-01-1984 | ROGNONI M.G.L. |